# EUROPEAN PATENT APPLICATION

(11) **EP 3 930 361 A1**
(43) Date of publication of application: **29.12.2021**
(21) Application number: 20181642.8
(22) Date of filing: 23.06.2020
(51) Int. Cl.: H04W 8/20, H04W 12/00

(54) **SYSTEM AND METHOD FOR OPERATING A USER DEVICE WITH PERSONALIZED IDENTITY MODULE PROFILES**

(71) Applicant: Koninklijke Philips N.V., 5656 AG Eindhoven (NL)
(72) Inventor: DEES, Walter, 5656 AE Eindhoven (NL); RAMACHANDRAN, Vignesh Raja Karuppiah, 5656 AE Eindhoven (NL); GONZALEZ TEJERIA, Jesus, 5656 AE Eindhoven (NL)
(74) Representative: Philips Intellectual Property & Standards

(57) **Abstract**

The present invention relates to a system (100) for operating a user device (110) with personalized identity module profiles in which identity module profiles are automatically downloaded from a subscription manager (130) onto a user device (110) upon identification of the user (120) of the user device (110), in a secure manner. The system (100) especially comprises a service system (140) for identifying the user corresponding to the derived user identity, and a subscription manager (130) for preparing personalized identity module profiles requested by the service system (140) and sending the prepared personalized identity module profiles to the user device (110).

## Description

### FIELD OF THE INVENTION

The present invention relates to a user device, a system and a method for operating a user device with personalized identity module (e.g. SIM) profiles, wherein the identity module profiles can be remotely provided for the user device.

### BACKGROUND OF THE INVENTION

With the advent of eSIM (embedded Subscriber Identity Module) technology, it is possible to remotely provide a mobile device with a SIM profile, for example using the GSMA RSP (Remote SIM Provisioning) framework as specified e.g. in SGP.21 and SGP.22, or in case of M2M or IoT devices the GSMA embedded SIM Remote Provisioning framework as specified e.g. in SGP.01 and SGP.02. The GSMA (Global System for Mobile communication Association) is also responsible for allocating official IMEI (International Mobile Equipment Identity) number ranges to all manufacturers of 3GPP compliant devices and records these ranges and device model information in a database. It offers a device look up and identification service based on this database that allows authorised third-party organisations to identify the manufacturer and model of a mobile device using the IMEI.

Further, shared use of connected devices between multiple users is becoming common in many verticals such as automobile, healthcare, entertainment, finance and education. In case these devices are connected to a mobile network, given the current technology restrictions the multiple users would need to share the same SIM profile and the same mobile network subscription to access the network, because the device's SIM profile is typically linked to the primary user for which the SIM was issued and registered. If there is no single primary user, i.e. if the device can be shared amongst different people (e.g. in case of a shared car), it is not possible to independently charge each user using their own subscription. It also implies that the device will use the personalized settings of the primary user that initially configured the device and for which the network has configured the SIM profile. Personalizing these shared devices for a specific user, in particular headless devices or devices with a limited user interface, such as drug-dispensers, AEDs, cars, payment terminals, is a cumbersome process for the user. In particular, if the device is only used temporarily, users are likely to not bother to personalize the device, leading to a worse user experience.

Currently, in order to provide a personal SIM profile to a device, a largely manual registration process is required to link a device to a specific user, for example by handing over identification documents (e.g. passport) when buying a device bundled with a mobile network subscription, or for example by logging into a registration server on the internet which can then generate a QR code that can be scanned by the mobile device in order to download a SIM profile. This process has to be repeated each time a user buys or wants to use another device. In particular for headless devices or devices with a limited user interface this may be tedious. In addition, it cannot be easily extended to multiple devices, and shared devices in particular.

### SUMMARY OF THE INVENTION

It is an object of the present invention to provide an easier and more comfortable way for a user to provide a user device with a personalized identity module profile.

This object is achieved by a user device as claimed in claim 1, a system as claimed in claim 6, and by a method as claimed in claim 12.

The disclosure generally proposes a user device, a system and a method capable of automatically downloading a personalized identity module (e.g. SIM) profile to personalize the (shared) user device upon identification of an active user A intending to use the user device.

According to a first aspect of the invention, the user device adapted to operate with personalized identity module profiles, comprises a controller being configured to operate the user device for users for which an assigned personalized identity module profile is enabled in the user device, a memory device for storing personalized identity module profiles and secret credentials to securely connect to a subscription manager, a detector for deriving a user identity (UID) of a user of the user device, and a communicator for secure data communication between the user device and a subscription manager based on the secret credentials stored in the memory device. Further, said controller is arranged for causing the communicator to transmit to a subscription manager the derived user identity and a device identity to the subscription manager, and the communicator is adapted to receive a personalized identity module profiles from the subscription manager prepared after identification of the user by a service system based on the derived user identity.

According to a second aspect of the invention, the system for operating a user device with personalized identity module profiles, comprises a user device comprising a controller being configured to operate the user device for users for which an assigned personalized identity module profile is enabled in the user device, a memory device for storing personalized identity module profiles and secret credentials to securely connect to a subscription manager, a detector for deriving a user identity (UID) of a user of the user device, and a communicator for secure data communication between the user device and a subscription manager based on the secret credentials stored in the memory device. The system also comprises a service system being configured to identify the user corresponding to the derived user identity and to request personalized identity module profiles for the user device, and a subscription manager being configured to forward the derived user identity and a device identity, EID, received from the user device to the service system, and to send prepared personalized identity module profiles to the user device requested by the service system.

By providing the user device with a detector for deriving a user identity of the active user intending to use the user device and the system with a service system for identifying the active user corresponding to the derived user identity and requesting personalized identity module profiles for the user device from the subscription manager, a personalized identity module profile assigned to the active user intending to use the user device can be automatically downloaded from the subscription manager to the user device so that the active user can use the user device in an easy and comfortable way without a complex or intensive manual process. And by providing the user device with a communicator for secure data communication based on the secret credentials stored in the memory device, the automatic download of the personalized identity module profile can be performed more securely than e.g. by just connecting some web page on the Internet (e.g. via Wi-Fi or the cellular connection of another user of the device) and downloading the SIM profile from such web page.

The identity module profiles are e.g. USIM (Universal Subscriber Identity Module) profiles or ISIM (IMS Subscriber Identity Module) profiles that can be downloaded and stored on the user device, e.g. in an eSIM module, eUICC (embedded Universal Integrated Circuit Card), secure storage, or other secure hardware element. Personalized identity module profiles may not only encompass information to uniquely identify the device, but directly or indirectly also an associated user through its subscription data (e.g. stored in the UDM), which allows the service provider / network operator charge the correct person for the data communication. It may also contain or be associated with information about a set network services linked to the particular user's subscription (e.g. access to 5G instead of 4G, access to certain slices and/or non-public networks and the configuration of service area restrictions, access to voicemail/caller identity features, RAT policies, etc.). In addition a personalized identity module profile may also include additional personal information that is useful to be stored securely in a (e)UICC, such as user identity and credentials of a third party services (such as specific cloud services or internet application as for example Spotify), first name, last name, address information, contacts list or address book, applets containing the algorithms and keys for symmetric encryption and certificate signing for data communication (e.g. to access corporate network infrastructure or non-public networks), first aid health information, health data identifier, first person contact in case of emergency, banking identifier and applets, privacy preferences (e.g. don't allow sharing of UE position information), etc.

The service system is an electronic system and preferably comprises one or more electronic devices.

In a variant of the first aspect of the invention, the controller is arranged for causing the communicator to transmit to the subscription manager the derived user identity and a device identity to the subscription based on a trigger. Further, in an example of this variant, the trigger may be one or more of the following triggers: after successful recognition of a user's fingerprint on a fingerprint scanner of the user device and the user device determining that no personalized identity module profile is available on the device corresponding to the user or, after the user is asked by a secure SIM application to identify him/herself (which may be launched automatically upon first use), or after pressing a button on the device or in the GUI of the device by the user.

In a preferred embodiment, the memory device of the user device comprises an eUICC (embedded Universal Integrated Circuit Card). In this case, the communicator of the user device preferably uses cellular network communication. Preferably, the eUICC is provisioned with an active bootstrap profile (e.g. Issuer Security Domain - Root (ISD-R) as specified by SGP.01 v1.1), which contains (non-modifiable) secret credentials to securely connect to the subscription manager (as specified e.g. by SGP.01 and SGP.02), and typically also a unique device identity of the user device (e.g. the eUICC identity).

In a preferred embodiment, the subscription manager comprises a routing entity (SM-SR) configured to manage secure data communication with the user device and the service system, and a profile preparation entity (SM-DP) for preparing personalized identity module profiles, especially based on information (such as policy information) received from the service system. In an alternative embodiment, the subscription manager consists of a discovery server (SM-DS) configured to perform initial authentication of the user device, to provide addresses for one or more profile preparation entities (SM-DP+), and to act as an event message broker between the user device and the one or more profile preparation entities (SM-DP+), and at least one profile preparation entity (SM-DP+) responsible for the creation, generation, management and the protection of personalized identity module profiles upon the input/request of a mobile network operator (as specified e.g. by SGP.21 and SGP.22).

In a preferred embodiment, the service system comprises at least one network operator system, especially at least one mobile network operator (MNO) system, to which users are subscribed and which is configured to request the subscription manager to prepare personalized identity module profiles for the user device, and an identifier system, especially an identity service provider (ISP) system, being configured to identify the active user corresponding to the derived user identity and to send information about the identified user to one of the at least one network operator systems to which the identified user is subscribed. For example, the subscription manager may send both the derived user identity and the device identity to the identity service provider, which in turn forwards the device identity (without actually using it) to the network operator system. Alternatively, the subscription manager sends the device identity directly to the mobile network operator system and the derived user identity to the identity service provider. In another alternative, the subscription manager sends both the derived user identity and the device identity to the network operator system, which in turn sends the derived user identity to the identity service provider.

The at least one network operator system is an electronic system and preferably comprises one or more electronic devices. Also, the identifier system is an electronic system and preferably comprises one or more electronic devices.

In a preferred embodiment, the communicator of the user device is configured to encrypt data to be sent to the subscription manager and to decrypt data received from the subscription manager. Preferably, the memory device of the user device comprises an eUICC which is also provisioned with an identity provider profile containing secret credentials issued by the ISP system of the service system for encrypting the user identity that is sent to the ISP system in order to not leak any user specific identification data to the subscription manager, for privacy reasons. Preferably, the communicator encrypts the derived user identity based on secret credentials issued by the ISP system and stored in the memory device (esp. an eUICC), and transmits the encrypted user identity from the user device to the subscription manager after setting up a secure channel based on the secret credentials issued by the subscription manager and stored in the memory device (esp. in the bootstrap profile of the eUICC).

In a preferred embodiment, the controller of the user device is also configured to detect whether the current user of the user device is still the same user for whom the personalized identity module profile has been received from the subscription manager, as an additional security action.

In a preferred embodiment, the service system, especially the network operator system of the service system, is also configured to verify whether the user corresponding to the derived user identity is legitimated to use the user device, as an additional security action.

In a preferred embodiment, the service system, especially the network operator system of the service system, is also configured to derive user specific settings for the user device (of the respective active user), and the subscription manager is also configured to prepare the personalized identity module profile bundled with user specific settings for the user device (as received from the service system).

In a preferred embodiment, at least one of the controller of the user device and the service system (esp. its network operator system) is also configured to send a message to the subscription manager that the current session of the user can be ended or that a limit for a number of sessions, or time limit has been reached, and the subscription manager is also configured to cause disabling or deleting the personalized identity module profile assigned to this user (stored in the memory device of the user device). For example, the controller of the user device may send that message based on an indication of the user of the user device. For example, the network operator system may send that message based on a detection that the user is intending to use another user device.

In a preferred embodiment, at least one of the controller of the user device and the service system (esp. its network operator system) is also configured to derive information that the user device will be used multiple times by a specific user within a time frame, and the subscription manager is also configured to cause temporarily enabling or disabling the personalized identity module profile assigned to the specific user (stored in the memory device of the user device) if the user device is used multiple times by the specific user within the time frame. This aspect avoids deleting personalized identity module profiles stored in the memory device of the user device if a user (legitimated to use the user device) frequently uses the user device. This results in an improved comfort for the user because the personalized identity module profile assigned to him does not have to be downloaded each time using the user device.

In a preferred embodiment, the service system (esp. its network operator system) comprises a receiver for receiving location information of user devices belonging to a specific user or a user message from a specific user as well as a memory for storing lists of user devices belonging to specific users. In this case, the service system (esp. its network operator system) is preferably configured to request the subscription manager to cause disabling or deleting the personalized identity module profiles assigned to the specific user or activating disabled personalized identity module profiles assigned to the specific user for a user device or all listed user devices (belonging to the specific user), depending on location information of user devices belonging to the specific user or a user message received from the specific user. This results in an improved security because the system is able to reduce a risk that a non-legitimated user can use the user device based on a personalized identity module profile assigned to a legitimated user stored in the user device.

According to a third aspect of the invention, the method for operating a user device with personalized identity module (e.g. SIM) profiles comprises: the user device deriving a user identity of a user of the user device; the user device sending the derived user identity and a device identity of the user device via a subscription manager to a service system if no personalized identity module profile assigned to the user of the user device is enabled in the user device; the service system identifying the user corresponding to the derived user identity and requesting a personalized identity module profile for the identified user to be used in the user device and providing the necessary information (such as policy information) to be used in the personalized identity profile preparation; and the subscription manager preparing a personalized identity module profile for the active user and sending the prepared personalized identity module profile to the user device, wherein the data communication between the user device and the subscription manager is a secure data communication based on secret credentials stored in the user device.

By deriving a user identity of the active user intending to use the user device by the user device and identifying the active user corresponding to the derived user identity and requesting personalized identity module profiles for the user device by a service system from the subscription manager, a personalized identity module profile assigned to the active user intending to use the user device can be automatically downloaded from the subscription manager to the user device so that the active user can use the user device in an easy and comfortable way without a complex or intensive manual process. And by using secure data communication based on the secret credentials stored in the user device, the automatic download of the personalized identity module profile can be performed more securely.

The identity module profiles are e.g. SIM (subscriber identity module) profiles.

Preferably, the derived user identity and the device identity are sent encrypted to the subscription manager, and the prepared personalized identity module profile is sent encrypted to the user device. Preferably, the derived user identity and the device identity of the user device are both encrypted based on secret credentials issued by an identity service provider system of the service system, and the encrypted user identity and the encrypted device identity are sent from the user device to the subscription manager after setting up a secure channel based on secret credentials issued by the subscription manager.

In a preferred embodiment, after receiving the personalized identity module profile for the user, the user device detects whether the current user of the user device is still the same user for whom the personalized identity module profile has been received from the subscription manager, as an additional security step.

In a preferred embodiment, as an additional security step, the service system (esp. a network operator system of the service system) verifies whether the user corresponding to the derived user identity is legitimated to use the user device, before requesting the subscription manager to prepare the personalized identity module profile for the identified user or before installing the prepared personalized identity module profile in the user device, as an additional security step.

In a preferred embodiment, the service system (esp. a network operator system of the service system) also retrieves user specific settings (of the respective active user) for the user device and provides this information to the subscription manager. In this case, the subscription manager preferably prepares the personalized identity module profile bundled with user specific settings for the user device.

In a preferred embodiment, the method further comprises: the user device or the service system (esp. a network operator system of the service system) sending a message to the subscription manager that the current session of the user can be ended or that a limit for a number of sessions, or time limit has been reached, and the subscription manager disabling or deleting the personalized identity module profile assigned to this user (stored in the user device). For example, the user device may send that message based on an indication of the user of the user device. For example, the service system (esp. its network operator system) may send that message based on a detection that the user is intending to use another user device.

In a preferred embodiment, the method further comprises: the service system (esp. a network operator system of the service system) requesting the subscription manager to cause disabling or deleting personalized identity module profiles assigned to a specific user or activating disabled personalized identity module profiles assigned to a specific user for a user device or all user devices belonging to the specific user, depending on location information of user devices belonging to the specific user or a user message received from the specific user.

According to a fourth aspect of the invention, a computer program product comprises instructions for implementing the above-explained method when executed by a computer system.

Further, a preferred embodiment of the invention can also be any combination of above-discussed embodiments or any combination of any number of appended dependent claims.

This invention can be applied e.g. to cellular devices like mobile phones, vital sign monitoring/telemetry devices, smartwatches, fall detectors or any type of remotely provision able devices.

These and other aspects of the invention will be apparent from and elucidated with reference to the embodiments described hereinafter.

### BRIEF DESCRIPTION OF THE DRAWINGS

The present invention will now be described in more detail, by way of example, with reference to the accompanying drawings, in which, mainly diagrammatically:
Fig. 1 shows a system according to an embodiment;
Fig. 2 shows a flow diagram of a method according to an embodiment; and
Fig. 3 shows a flow diagram of method steps optionally added to the method of Figure 2.

### DETAILED DESCRIPTION OF EMBODIMENTS

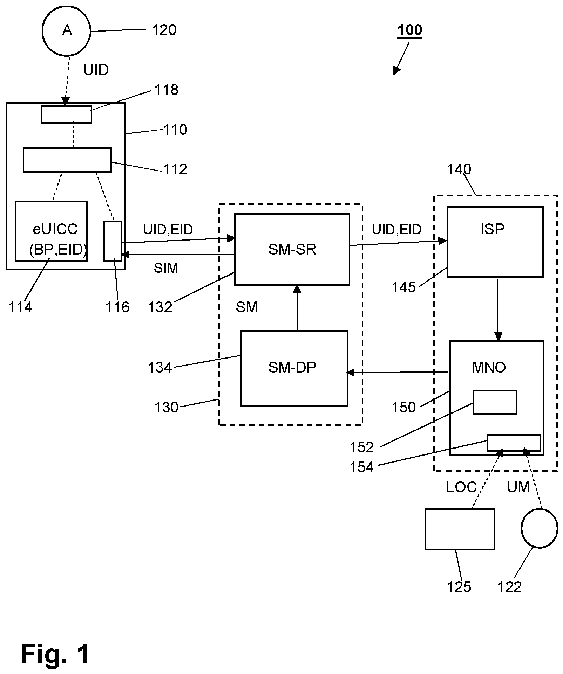

Fig. 1 exemplarily shows an embodiment of a system for operating a user device with personalized identity module profiles, especially subscriber identity module) SIM profiles and automatically downloading personalized SIM profiles to personalize the (shared) user device upon identification of an active user A intending to use the user device.

The system 100 comprises a user device, especially a mobile user device 110. The user device 110 may be an IoT device such as connected car, drug dispensers, and smart watch or a mobile phone, or another device with or without a graphical user interface.

The system 100 further comprises a subscription manager (SM) 130 having a secure routing entity (SM-SR) 132 and a profile preparation entity (SM-DP) 134 (possibly running in the same IP domain as the SM-SR or in a separate domain, e.g. a separate provisioning server), an electronic service system 140 having an electronic identifier system 145 and an electronic network operator system 150. The identifier system 145 is e.g. an identity service provider (ISP) system, and the network operator system 150 especially is a mobile network operator (MNO) system (typically called Public Land Mobile Network or PLMN) operating a mobile core network such as EPC or 5GC or an Non-Public Network (NPN) service provider operating its own mobile core network on top of an MNO core network (possibly using a subset of components operated by the MNO and a subset operated by the NPN service provider, or as a standalone mobile core network). In the remainder of the document the term MNO system will be used to denote both a PLMN or a NPN. All these components of the system 100 are connected via secure channels of a network such as the Internet.

As illustrated in Figure 1, the user device 110 comprises a controller 112 configured to operate the user device 110 for users for which the user device has a personalized SIM profile. The controller 112 especially allows operation of the user device 110 for users for which the user device has an enabled personalized SIM profile but - depending on the kind of the user device - may also allow e.g. emergency calls by everybody The user device 110 also has a memory device 114 operating an eUICC (embedded Universal Integrated Circuit Card) or operating a secure element with secure memory and/or secure processing capabilities, having the necessary protection mechanisms to provide safe storage and/or processing of SIM profiles and credentials. Memory device 114 has an active bootstrap profile (BP) which is pre-provisioned preferably by its manufacturer during manufacturing. A bootstrap profile (non-modifiable) secret credentials to securely connect to the secure routing entity (SM-SR) 132 of the subscription manager 130 (as specified e.g. by SGP.01 and SGP.02) and may contain a unique device identity EID of the user device 110. The unique device identity EID may also be derived dynamically from one or more of the secret credentials.

The connection to the secure routing entity may be offered by a different network (i.e. 'onboarding network') operated by a different mobile network operator or network service provider than the cellular network to which the user wants to gain access to, and for which the personalized identity module profile needs to be provisioned on user device 110. The secure routing entity may run external to the onboarding network, e.g. as a service on the Internet offered for example by the manufacturer of memory device 114. , in which case the onboarding network offers the necessary IP connectivity between the user device and the external network, or the secure routing entity may run internally in the onboarding network, as a separate network function or combined e.g. with the Mobility Management Entity (MME) or Access Management Function (AMF) or other core network function. In order to allow the user device to connect to the SM-SR, the SM-SR may authenticate the user device by checking credentials received from the user device (e.g. derived from credentials stored as part of the bootstrap profile) with a default/bootstrapping credential database running inside or outside of the onboarding network (e.g. in the core network of the PLMN or NPN to which the user of the user device wants to gain access to). The SM-SR may run an authentication protocol over the connection with the user device, and e.g. perform a challenge/response mechanism (e.g. using pre-shared keys or other unique device authentication information) or a security handshake (e.g. Diffie-Helman) or performing a public-key verification (e.g. by checking if a public key or certificate (which may also contain a unique identity) available at the SM-SR for a particular user device (e.g. retrieved from a database of user devices) and verify if the user device has the corresponding private key). In order to prevent a user device to connect to a fake SM-SR, also the user device may perform authentication of the SM-SR's credentials by checking credentials received from the SM-SR with credentials stored in the bootstrap profile.

Alternatively, the user device is initially provisioned with credentials to securely access a trusted Wi-Fi network or other non-3GPP network, e.g. using a certificate for use with EAP-TLS, EAP-AKA, or other credentials to securely connect to an AAA server for authentication (e.g. using WPA2 Enterprise), or with credentials to securely connect to an Evolved Packet Data Gateway (ePDG) or Non-3GPP Inter Working Function (N3IWF) function in a visiting or home operator network via e.g. an untrusted Wi-Fi network, through which the user device can connect to the subscription manager.

Any operational profile / personalized identity module profile (i.e. a profile that has the identities, secure credentials and policies for a user device to connect to a cellular network, equivalent to a SIM card) in the user device 110 can be downloaded, installed, enabled, disabled or deleted through the use of the bootstrap profile (BP), being the on-card representative of the SM-SR 132. Such profile may typically be an eSIM or USIM profile, and usually runs in its own security realm within an eUICC (e.g. as another ISD-P (Issuer Security Domain - Profile) instance) or another secure element (with secure memory and/or secure processing capabilities), separate from the bootstrap profile. The profile of a PLMN usually contains an International Mobile Subscriber Identity (IMSI) to identify the device and credentials to perform the EAP-AKA procedures and to derive other keys. In case of a non-public networks or non-SIM device accessing a PLMN, the profile may contain one or more other network specific identifiers, device identifiers (e.g. globally unique identifier (GUID)), single sign-on identifiers (e.g. Open ID identifier), pre-shared keys, certificates, AAA credentials, in order to gain access to the network. Note that such profile may not only contain the necessary credentials to connect to a cellular network, it may also contain additional credentials to connect to other networks such as Wi-Fi networks. Furthermore, it may contain secondary authentication credentials to connect to a network slice or non-public network operated by a third-party service provider on top a cellular core network operated by an MNO, whereby the primary authentication credentials are used to securely connect to the cellular core network operated by an MNO, and the secondary authentication credentials are used to securely connect to the network slice or non-public network operated by a third-party service provider. The primary and secondary authentication/security credentials may be stored and operated in their own separate security realm and operating environment, whereby the primary and secondary authentication/security credentials e.g. may be stored as separate profiles/ISD-Ps within the eUICC, or whereby the primary authentication/security credentials are stored in the eUICC and are processed within the eUICC secure operating environment, but whereby the secondary credentials are stored in a different secure memory (e.g. software and/or hardware protected non-volatile memory area) or secure storage device (e.g. password protected area on a harddisk) and are operated by another processor (e.g. the general purpose CPU) on the user device). The user device 110 itself has a physical identity (e.g. MAC address) different from the device identity EID of the eSIM (e.g. EID as specified by GSMA in SGP.02) and the identity of the bootstrap/operational profile (e.g. ICCID as specified by GSMA in SGP.02). According to the GSMA specifications, when the user device 110 connects to the SM-SR 132, the SM-SR 132 would normally select and trigger the download of the SIM profile of the user device 110 solely on the basis of the device identity EID, as the user device 110 is assumed to be linked only to a single primary user of the user device 110. In order to allow downloading a SIM profile on behalf of another user, in addition to the bootstrap profile, the secure credentials of the identity service provider are preferably stored within its own separate security realm in the user device's eUICC 114, e.g. under a separate profile (ISD-P) called the identity provider profile.

The user device 110 also comprises a detector 118 for deriving a user identity UID of a user 20 intending to use the user device 110. For example, the detector 118 may comprise a biometric sensor (e.g. fingerprint scanner, camera) that can sense a biometric of the user and derive the user-specific identity UID. Alternatively, other identities of the user of the user device such as, but not limited to, a username password combination, unique secret pin code, user specific behavior pattern, or any pre-agreed unique set of actions (specific key sequence, unlock pattern, handwriting, audio input) that can be identified by a function (or application) on the user device that can encode this set of actions in accordance with encoding and identification rules by the identity service provider (ISP) system, can also be obtained by the detector 118 instead of or in addition to the biometric identity of the user. Alternatively, if the user device 110 does not have a biometric sensor itself, the user of the user device can use a biometric sensor on another device (e.g. mobile phone) to derive a user-specific identity UID of the user and transfer it to the user device 110 via an out-of-band mechanisms (e.g. NFC) to be encrypted by the identity provider profile of the user device 110. Such an external biometric sensor on another device is also a detector 118 of the user device 110 in the sense of this disclosure. In Figure 1, there is exemplarily shown a user A for whom the user device 110 is not yet commissioned with a personalized SIM profile assigned to that user A.

Further, the user device 110 comprises a communicator 116 for data communication with the SM-SR 132 of the subscription manager 130. In a preferred embodiment, the data communication is based on cellular communication (e.g. 4GLTE, or 5G NR). All the data communication between the eUICC 112 and the SM-SR 132 should be encrypted based on the secure credentials stored on the bootstrap profile BP. Therefore, the communicator 116 of the user device 110 is configured to encrypt data to be sent to the SM-SR 132 and also to decrypt data received from the SM-SR 132.

For example, the user device 110, in particular the controller 112 of the user device 110 has an application, preferably running within the security context of identity provider profile within the eUICC 114 (e.g. JAVA application as specified in Global Platform Card Specification V 2.1.1) that is capable of retrieving or receiving the user-specific identity information UID from the identifier 118. The application is further able to obtain the device identity EID of the eUICC 114 and to encrypt both the user-specific identity UID and the device identity EID itself or by using a separate encryption application. The encryption is performed using the secure credentials issued by the ISP system 145 stored under the security context of the identity provider profile. The contact details (e.g. IP address, URL) of the ISP system 145 are also stored under the security context of the identity provider profile. In cooperation with the bootstrap profile, the encrypted user-specific identity UID and the encrypted device identity EID, possibly together with the contact details of the ISP system 145, should be sent to the SM-SR 132 of the subscription manager 130 using a secure channel between the user device 110 and the SM-SR 132, set up using the bootstrap profile's credentials. To this end, the user device 110 and the SM-SR 132 may use the ES5 interface (as specified in SGP.01/SGP.02) extended with one or more additional messages or message attributes or additional data fields. Alternatively, a universal encrypting app stored in the security context of the bootstrap profile may be used to encrypt the user-specific identity UID, based on the public key issued by a public ISP system (of e.g. governmental institutes) which upon being received by the ISP system 145 is decrypted using a private key of the public ISP system. The contact details (e.g. IP address, URL) of the ISP system 145, which are stored along with the public key of ISP under the security context of the bootstrap profile, are also sent to the SM-SR 132 to forward the encrypted user-specific identity UID and the device identity EID of the user device 110 to the corresponding ISP system 145. Using the contact details of the ISP system 145, the SM-SR 132 sets up a logical communication channel (either directly or indirectly) between the user device and the ISP. The ISP may use this logical communication channel to perform an authentication and/or identity verification protocol, such as EAP-TLS or EAP-AKA.

The identity service provider to which the ISP system 145 belongs can e.g. be a mobile phone company, internet service provider, electricity provider, hospital etc. The ISP system 145 is configured to identify the active user 120 based on the derived user-specific identity UID. Especially, the ISP system 145 is able to decrypt the received user-specific identity UID to identify the active user 120 and to determine a corresponding network operator to which the active user 120 is subscribed, and optionally also to decrypt the received unique device identity EID of the user device 110. For this, the ISP system 145 has a database of user identity information and possibly different means in which the user can be identified. If a match is found between the received identity information UID and a user included in the database, the ISP system 145 may contact another database (possibly served by another entity in the network or other organization) to retrieve information about the corresponding MNO to which the active user 120 is subscribed. Further, the ISP system 145 is configured to send a notification to the MNO system 150 of the determined MNO that a SIM profile is being requested for the active user 120 at the user device 110 with the unique device identity EID. The ISP system 145 may also be further configured to operate as an identity broker and run protocols such as OpenID, OpenAuth, SAML or other variants to communicate identity related information and/or user authentication information to the determined MNO.

In an alternative configuration, the SM-SR 132 of the subscription manager 130 sends only the derived user identity UID to the ISP system 145 and sends the device identity EID directly to the MNO system 150. In another alternative configuration, the SM-SR 132 of the subscription manager 130 sends both the derived user identity UID and the device identity EID to the MNO system 150, which in turn sends the derived user identity UID to the IPS system 145. In yet another alternative configuration, the SM-SR 132 of the subscription management 130 sends both ends both the derived user identity UID and the device identity EID to the SM-DP 134, which in turn forwards these identities to the MNO system 150.

The MNO system 150 is configured to request a personalized SIM profile for the identified user 120 to be used in the user device 110. Also, the MNO system 150 comprises a memory 152 for storing lists of active user devices belonging to specific users. Especially, the MNO system 150 is able to automatically register the user device 110 as an additional device for the user 120 in a list of active user devices stored in its memory 152. Preferably, the MNO system 150 further comprises a receiver 154 for receiving location information LOC of user devices, especially including a primary user device 125, of specific users. Preferably, the receiver 154 is also able to receive user messages UM from specific users 122.

The SM-DP 134 of the subscription manager 130 is configured to prepare personalized SIM profiles. The SM-DP 134 is also able to identify the SM-SR 132 corresponding to the user device 110 e.g. by receiving the necessary information from the MNO system 150 or by querying a central discovery server. The SM-SR 132 of the subscription manager 130 is configured to encrypt the SIM profile prepared by the SM-DP 134 and to send the encrypted SIM profile to the user device 110. Alternatively, the user device 110 and the SM-DP 134 may be able to communicate directly over the provisioning network, using a secure connection based e.g. on credentials stored as part of the bootstrap profile in the user device.

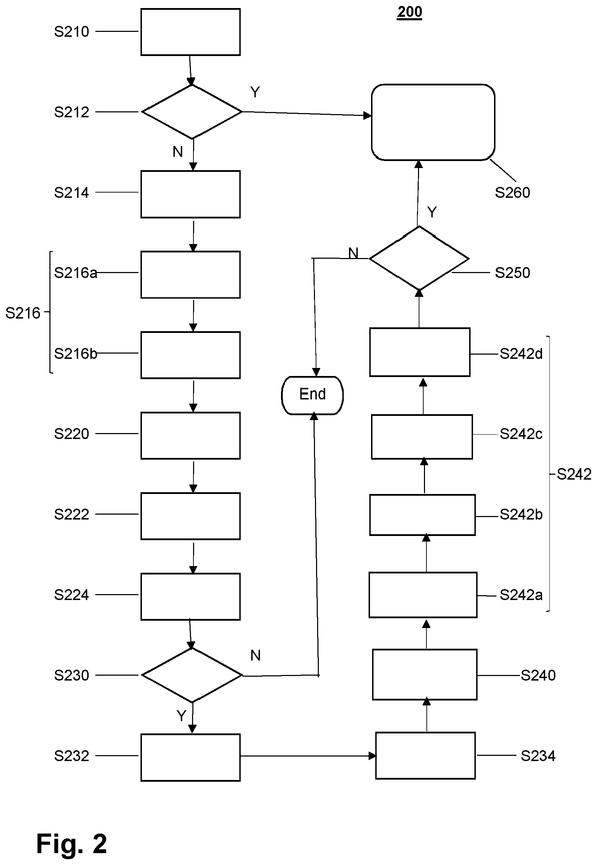

Referring to Figure 2, an exemplary embodiment of a method 200 for operating a user device with personalized SIM profiles performed by the above-discussed system 100 of Figure 1 will now be described.

For better understanding the flowchart of the method 200 illustrated in Figure 2, the following short explanations of the method steps should be noted:
S210 deriving user identity UID of user intending to use the user device 110;
S212 checking whether a personalized SIM profile assigned to the user 120 is enabled in the user device 110;
S214 encrypting derived user identity UID and device identity EID of user device 110;
S216 sending encrypted data via SM 130 to service system 140;
S216a sending encrypted data to SM 130;
S216b forwarding encrypted data to service system 140;
S220 identifying the user 120 intending to use the user device 110;
S222 retrieving information about a MNO to which the identified user 120 is subscribed;
S224 sending information about device identity EID and about identified user 120 to MNO system 150 of determined MNO;
S230 verifying that the active user 120 is legitimated to use the user device 110;
S232 retrieving user specific settings of the user 120 for the user device 110;
S234 requesting personalized SIM profile for (legitimated) user 120;
S240 preparing personalized SIM profile for user 120;
S242 sending prepared SIM profile to user device 110;
S242a requesting SM-SR 132 to forward prepared SIM profile to user device 110;
S242b downloading SIM profile from SM-DP 134;
S242c encrypting SIM profile;
S242d sending encrypted SIM profile to user device 110;
S250 making sure that current user 120 is the same user for whom the received SIM profile has been prepared;
S260 starting operation of user device 110 by user 120.

The method 200 starts if a user 120 intends to use the user device 110. In exemplary Figure 1, the user 120 is a user A and the user device 110 has a eUICC 114 which is not yet commissioned with a SIM profile assigned to user A. In a first step S210, the detector 118 of the user device 110 derives a user identity UID of the user 120 intending to use the user device 110. Then, in step S212, the controller 112 of the user device 110 checks whether a personalized SIM profile assigned to the user 120 is stored and enabled in the eUICC 114 of the user device 110. In case the eUICC 114 of the user device is already commissioned with a personalized SIM profile assigned to the user (Y in step S212), the controller 112 allows operating the user device 110 by the user 120 and, in step S260, starts operation of the user device 110 by the user 120.

In case the eUICC 114 of the user device 110 is not yet commissioned with a personalized SIM profile assigned to the user (N in step S212), the controller 112 decides to automatically download a personalized SIM profile assigned to the user 120 and proceeds to step S214. In step S214, the communicator 116 of the user device 110 encrypts the user identity UID derived by the detector 118 and the device identity EID of the user device 110 stored in the eUICC 114. Then, in step S216, the communicator 116 sends the encrypted data via the subscription manager 130 to the service system 140. Sending step S216 comprises a step S216a in which the communicator 116 of the user device 110 sends the encrypted data to the subscription manager 130, especially to the SM-SR 132 of the subscription manager 130, and a step S216b in which the SM-SR 132 of the subscription manager 130 forwards the encrypted data to the service system 140, especially to the ISP system 145 of the service system 140. Especially, in step S216b, the SM-SR 132 receiving the encrypted user-specific identity UID and the encrypted unique device identity EID from the user device 110 sets up a secure connection between the SM-SR 132 and the ISP system 145 to transmit the encrypted identities to the ISP system 145. Upon receiving the encrypted identities, the SM-SR 132 automatically forwards the encrypted user-specific identity UID and the device identity EID to either a public ISP system or a private ISP system depending on the contact details (e.g. IP address, URL) of the ISP system 145.

Then, in step S220, the ISP system 145 identifies the active user A intending to use the user device 110 corresponding to the user identity UID derived by the detector 118 of the user device 110. In this context, upon receiving the encrypted user-specific identity UID from the SM-SR 132 of the subscription manager 130, the ISP system 145 decrypts the encrypted user-specific identity UID and the encrypted unique device identity EID of the user device 110. After having identified the user A, in step S222, the ISP system 145 retrieves information about a network operator to which the determined user A is subscribed. Then, in step S224, the ISP system 145 sends information about the device identity EID and about the identified user A to the network operator system 150 of the determined network operator, especially to the mobile network operator (MNO) system 150 of the determined MNO.

With regard to method steps S216b to S224, alternatively, the SM-SR 132 of the subscription manager 130 forwards the encrypted device identity EID directly to the MNO system 150 and the encrypted user identity UID to the ISP system 145, whereafter the ISP system decrypts the received user identity UID and identifies the user A and sends information about the identified user A to the MNO system 150. In another alternative, the SM-SR 132 of the subscription manager 130 forwards both the encrypted user identity UID and the encrypted device identity EID to the MNO system 150, whereafter the MNO system 150 sends the encrypted user identity UID to the IPS system 145 for identifying the user A.

Preferably, as an additional security step, in optional step S230, the MNO system 150 verifies that the identified user A is legitimated to use the user device 110. For example, the MNO system 150 could use out-of-band technologies (e.g. SMS, screen confirmation through MNO owned app on different device of a user A, QR code confirmation in the website of MNO with a user A logged in) to check whether the user A is legitimated to use the user device 110. Alternatively, behavior metrics (e.g. pattern unlock in a 3X3 grid, location based identification) can be used by the user A on a headed device of user A to prove his integrity to the MNO system 150. If user A is not legitimated to use the user device 110 (N in step S230), the method is ended. If user A is legitimated to use the user device 110 (Y in step S230), the method continues.

In another optional step S232, the MNO system 150 additionally retrieves user specific settings of the identified user A for the user device 110. For example, upon receiving the device identity EID from the ISP system 145, the MNO system 150 could identify the device type (e.g. drug dispenser) and request for user specific settings (e.g. drug dosage per day for the user A) of the user device 110 from a corresponding service provider (e.g. clinic, pharmacy). In addition, after receiving the notification from the ISP system 145, the MNO system 150 may automatically register the user device 110 as an additional user device for user A in a list of user devices stored in its memory 152.

In next step S234, the MNO system 150 requests a personalized SIM profile for the user A. Especially, the MNO system 150 requests the SM-DP 134 of the subscription manager 130 to prepare a personalized SIM profile for the user A specific to the user device 110. Preferably, the MNO system 150 securely sends the information to the SM-DP 134 (e.g. via an ES2 interface as specified by GSMA in SGP.02). Then, in step S240, the SM-DP 134 prepares a personalized SIM profile for the user A specific to the user device 110 as specified e.g. by the RSP architecture in SGP.01. In case the MNO system 150 has also retrieved user specific settings in step S232 and forwarded this information together with the SIM profile preparation request to the SM-DP 134 in step S234, the SM-DP 134 prepares a personalized SIM profile for the user A bundled with user-specific settings for the user device 110.

Then, in step S242, the subscription manager 130 securely sends the prepared personalized SIM profile to the user device 110. In the embodiment shown in Figure 2, this step S242 includes a number of sub-steps S242a-d. First, in step S242a, after preparing the SIM profile, the SM-DP 134 automatically identifies the corresponding SM-SR 132 e.g. by receiving the necessary information from the MNO system 150 or by querying a central discovery server with the EID of the user device and automatically requests e.g. via the ES3 interface as specified by GSMA in SGP.02 the SM-SR 132 to forward the prepared SIM profile to the user device 110. Then, in step S242b, the SM-SR 132 automatically downloads the prepared SIM profile from the SM-DP 134 and, in step S242c, encrypts the prepared SIM profile. Finally, in step S242d, the SM-SR 132 sends the encrypted SIM profile to the user device 110, using the secure channel setup between the user device 110 and the SM-SR 132.

After receiving the personalized SIM profile from the subscription manager 130, in step S250, preferably, the controller 112 of the user device 110 makes sure that the current user is still the user A for whom the received SIM profile has been prepared by the SM-DP 134 that no other user 120 in the meantime has started using the device. In case same user A is still intending to use the user device 110 (Y in step S250), the controller 112 allows operating the user device 110 by the user A and, in step S260, starts operation of the user device 110 by the user A. In case, however, the current user 120 intending to use the user device 110 is no longer user A for whom the received SIM profile has been prepared by the SM-DP 134 (N in step S250), the controller 112 blocks operating the user device 110 by the current user 120, and the method 200 is ended.

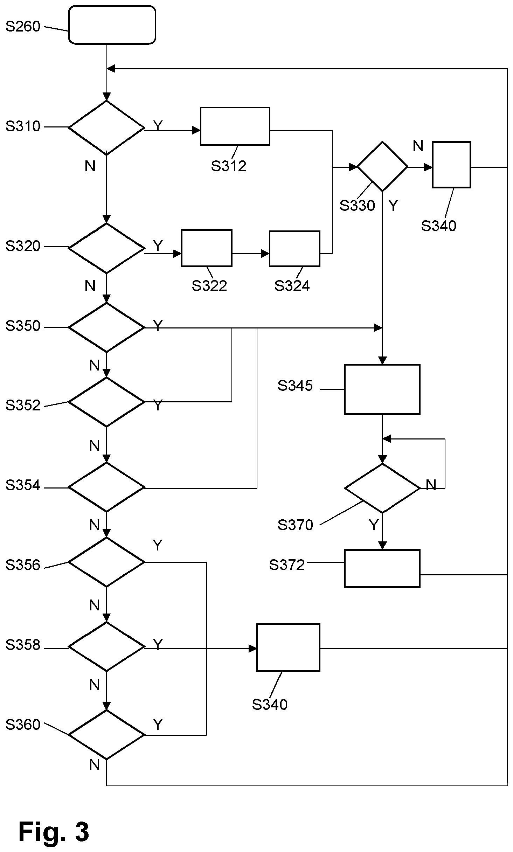

Referring now to Figure 3, some embodiments optionally added to method 200 of Figure 2 will be described.

For better understanding the options illustrated in the flowchart of Figure 3, the following short explanations of the method steps should be noted:
S310 receiving input of end of session and de-commissioning from user 120;
S312 sending message of end of session to SM 130;
S320 detecting location of the user via another user device;
S322 prompting the user to confirm end of session;
S324 indicating SM 130 to disable or delete SIM profile assigned to the user 120 for the user device 110;
S330 checking whether the user device 110 is frequently used by the user 120;
S340 deleting SIM profile assigned to the user 120 for user device 110;
S345 disabling SIM profile assigned to the user 120 for user device 110;
S350 detecting that primary device 125 of user 120 communicates from different location than that of user device 110;
S352 detecting that there is another user intending to use the same user device 110;
S354 detecting that the user device 110 is in idle mode for a predetermined time after the first use of the user 120;
S356 detecting that there is a change in the subscription of a specific user with the MNO;
S358 receiving a user message UM from a specific user 122 to delete all personalized SIM profiles assigned to him;
S360 receiving a user message UM from a specific user 122 that one of his user devices has been stolen;
S370 detecting that a specific user has identified himself to connect to the user device 110 via his primary user device 125 in proximity of user device 110;
S372 activating the disabled SIM profile assigned to the specific user for user device 110.

In one embodiment, the user A indicates to the user device 110 that the current session of user A on the user device 110 can be ended or that a limit for a number of sessions, or time limit has been reached, and the user device 110 can be de-commissioned, either directly via a user interface of the user device 110 or via a user interface of another device of user A. After receiving input of end of session and de-commissioning from the user (Y in step S310), in step S312, the user device 110 sends an "end of session" message to the SM-SR 132 via the secure channel. After receiving such "end of session" message, the SM-SR 132 will either disable (S345) or delete (S340) the SIM profile assigned to the user automatically via the bootstrap profile of the user device 110. Alternatively, if the service system 140, especially its MNO system 150, detects a location of the user 120 via another user device (Y in step S320), in step S322, the MNO system 150 can prompt the user 120 on a user interface to confirm that he wants to log out of the session from the user device 110 D and de-commission the user device 110. Upon confirmation from the user 120, in step S324, the MNO system 150 can indicate to the SM-SR 132 to either disable or delete the personalized SIM profile assigned to the user A for the user device 110. After receiving such indication, the SM-SR 132 will either disable (S345) or delete (S340) the SIM profile assigned to the user automatically via the bootstrap profile of the user device 110.

In this embodiment, it is preferred to check whether the user device 110 is expected to be used multiple times (i.e. multiple sessions) by the user 120 within a certain time frame, in step S330. For example, a user can be queried if a user device 110 will be used frequently by him and/or if the user device is expected to be used again relatively soon. Upon affirming the multiple use of the user device 110 by the user 120 (Y in step S330), the personalized SIM profile assigned to the user 120 on the user device 110 will be only disabled (step S345) but not deleted by the SM-SR 132, and will be enabled again if it is identified that the user uses the device again. Alternatively, the service system 140 (esp. its MNO system 150) can request the SM-SR 132 to only disable and not delete the personalized SIM profile assigned to the user, upon monitoring and identifying a continuous use of the user device 110 by the user 120 (e.g. if a user device is logged in for three days with a user-specific identity UID), and permanently delete the personalized SIM profile assigned to the user 120, upon identifying an infrequent use of the user device 110 by the user 120 (e.g. if the user device 110 is not logged in for three days with a user-specific identity UID). In a yet another alternative, the MNO system 150 can randomly query a user for identity and affirmation on the continuous use of the user device 110. In this case, the MNO system 150 can temporarily disable a personalized SIM profile assigned to a specific user, when the specific user is not able to affirm the same to the MNO system 150. Alternatively, an out-of-band technology (e.g. SMS) can be used for pointing to a secure URL of the SM-SR 132 or a server provided by the MNO system 150 which can present menu containing various options (e.g. disable, delete, activate) on a user interface of another device of the specific user. Depending on the choice of the specific user in the other user device, the SM-SR 132 can automatically execute the choice of the specific user on the user device 110.

In further embodiments, the service system 140 (esp. its MNO system 150) may use a location information LOC of user devices belonging to a specific user, especially a primary device 125 of a specific user, the list of user devices belonging to a specific user stored e.g. in the memory 152 of the MNO system 150 and/or a user message UM received from a specific user 122A, to automatically delete or disable personalized SIM profiles assigned to the specific user for the user device. For example,
- the SIM profile assigned to the user 120 may be disabled for the user device 110 (step S345) if the primary device 125 of the user 120 is actively communicating to the network from a different location than that of the user device 110 (Y in step S350);
- the SIM profile assigned to the user 120 may be disabled for the user device 110 (step S345) if a new request with a user-specific identity UID of a user for a SIM profile for the user device 110 is sent to the MNO system 150, while there is an active network connection to a device D with the same device identity (Y in step S352);
- the SIM profile assigned to the user 120 may be disabled for the user device 110 (step S345) if the user device 110 is in idle mode for a predetermined time (e.g. 3 hours after the first use) (Y in step S354);
- the SIM profile assigned to a specific user may be automatically deleted for the user device 110 (step S340) if there is a change in the subscription of the specific user with the MNO (Y in step S356);
- the SIM profile assigned to a specific user may be automatically deleted for the user device 110 (step S340) if the specific user has requested the MNO system 150 to delete all personalized SIM profiles assigned to him (Y in step S358);
- the SIM profile assigned to a specific user may be automatically deleted for the user device 110 (step S340) if the specific user has reported to the MNO system 150 that one of his user devices has been stolen (Y in step S360);
- a disabled SIM profile assigned to a specific user may be automatically activated again for the user device 110 (step S372) if the primary device 125 of the specific user is in proximity of the user device 110 and the specific user has identified himself to connect to user device D via the primary device 125 (Y in step S370).

While the invention has been illustrated and described in detail in the drawings and foregoing description, such illustration and description are to be considered illustrative or exemplary and not restrictive. The invention is not limited to the disclosed specific embodiments. Having been provided with the description and illustration of the present application, one skilled in the art may envision variations, modifications and alternate aspects to the disclosed embodiments falling within the scope of appended claims.

In the claims, the words "comprising", "having" and "including" do not exclude other elements or steps, and the indefinite article "a" or "an" does not exclude a plurality. In the claims, the term "at least one of A and B" means "A and/or B" and does include all variants of "only A", "only B" and "both A and B". In the claims, the term "component configured to perform a procedure" means that the component itself comprises a hardware element or a software application for performing the procedure or the component is coupled to another component for performing the procedure. A single processor or other unit may fulfill the functions of several items recited in the claims. The mere fact that certain measures are recited in mutually different dependent claims does not indicate that a combination of these measures cannot be used to advantage. A computer program may be stored / distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A user device adapted to operate with personalized identity module profiles, comprising:
- a controller (112) being configured to operate the user device for users for which an assigned personalized identity module profile is enabled in the user device,
- a memory device (114) for storing personalized identity module profiles and secret credentials to securely connect to a subscription manager,
- a detector (118) for deriving a user identity (UID) of a user (120) of the user device, and
- a communicator (116) for secure data communication between the user device and a subscription manager based on the secret credentials stored in the memory device; wherein said controller (112) is arranged for causing the communicator (116) to transmit to a subscription manager (130) the derived user identity and a device identity to the subscription manager,
and wherein the communicator (116) is adapted to receive a personalized identity module profiles from the subscription manager prepared after identification of the user by a service system based on the derived user identity.

2. The user device of claim 1, wherein the memory device (114) comprises an eUICC, and the communicator (116) uses cellular network communication.

3. The user device of claim 1, wherein the controller (112) of the user device (110) is configured to send a message to the subscription manager that the current session of the user can be ended or that a limit for a number of sessions, or time limit has been reached, thereby causing disabling or deleting the personalized identity module profile assigned to this user.

4. The user device of claim 1, wherein the controller (112) is configured to derive information that the user device will be used multiple times by a specific user within a time frame, and the personalized identity module profile assigned to the specific user is temporarily enabled or disabled if the user device is used multiple times by the specific user within a time frame.

5. The user device of claim 1, wherein the controller (112) is arranged for causing the communicator (116) to transmit to the subscription manager (130) the derived user identity and a device identity to the subscription based on a trigger.

6. A system (100) for operating a user device with personalized identity module profiles, comprising:
- a user device (110), comprising:
- a controller (112) being configured to operate the user device for users for which an assigned personalized identity module profile is enabled in the user device,
- a memory device (114) for storing personalized identity module profiles and secret credentials to securely connect to a subscription manager,
- a detector (118) for deriving a user identity (UID) of a user (120) of the user device, and
- a communicator (116) for secure data communication between the user device and a subscription manager based on the secret credentials stored in the memory device;
- a service system (140) being configured to identify the user corresponding to the derived user identity and to request personalized identity module profiles for the user device; and
- a subscription manager (130) being configured to forward the derived user identity and a device identity, EID, received from the user device to the service system, and to send prepared personalized identity module profiles to the user device requested by the service system (140).

7. The system of claim 6, wherein the subscription manager (130) comprises a routing entity (132) being configured to manage secure data communication with the user device and the service system, and a profile preparation entity (134) being configured to prepare personalized identity module profiles.

8. The system of claim 6, wherein the service system (140) comprises at least one network operator system (150) to which users are subscribed and which is configured to request the subscription manager (130) to prepare personalized identity module profiles for the user device, and an identifier system (145) being configured to identify the active user corresponding to the derived user identity and to send information about the identified user to one of the at least one network operator systems to which the identified user is subscribed.

9. The system of claim 6, wherein at least one of the controller (112) of the user device (110) and the service system (140) is also configured to send a message to the subscription manager that the current session of the user can be ended or that a limit for a number of sessions, or time limit has been reached, and the subscription manager (130) is also configured to cause disabling or deleting the personalized identity module profile assigned to this user.

10. The system of claim 6, wherein at least one of the controller (112) of the user device (110) and the service system (140) is also configured to derive information that the user device will be used multiple times by a specific user within a time frame, and the subscription manager (130) is also configured to cause temporarily enabling or disabling the personalized identity module profile assigned to the specific user if the user device is used multiple times by the specific user within a time frame.

11. The system of claim 6, wherein the service system (140) comprises a receiver (154) for receiving location information (LOC) of user devices belonging to a specific user or a user message (UM) from a specific user (122) and a memory (152) for storing lists of user devices belonging to specific users, and the service system (140) is configured to request the subscription manager to cause disabling or deleting the personalized identity module profiles assigned to the specific user or activating disabled personalized identity module profiles assigned to the specific user for a user device or all listed user devices, depending on location information of user devices belonging to the specific user or a user message received from the specific user.

12. A method (200) for operating a user device (110) with personalized identity module profiles, comprising the steps of:
- deriving (S210) a user identity (UID) of a user (120) of the user device, by the user device (110);
- sending (S216) the derived user identity (UID) and a device identity (EID) of the user device via a subscription manager (130) to a service system (140) if no personalized identity module profile assigned to the user of the user device is enabled in the user device, by the user device (110);
- identifying (S220) the user corresponding to the derived user identity and requesting (S234) a personalized identity module profile for the identified user to be used in the user device, by the service system (140); and
- preparing (S240) a personalized identity module profile for the identified user and sending (S242) the prepared personalized SIM profile to the user device, by the subscription manager (130),
wherein the data communication between the user device and the subscription manager is a secure data communication based on secret credentials stored in the user device.

13. The method of claim 12, wherein the service system (140) verifies (S230) whether the user corresponding to the derived user identity is legitimated to use the user device, before requesting (S234) the subscription manager (130) to prepare the personalized identity module profile for the identified user or before installing the prepared personalized identity module profile in the user device.

14. The method of claim 12, wherein the service system (140) also retrieves (S232) user specific settings for the user device and provides this information to the subscription manager, and the subscription manager (130) prepares (S240) the personalized identity module profile bundled with user specific settings for the user device.

15. The method of claim 12, further comprising: requesting the subscription manager (130), by the service system (140), to cause disabling (S345) or deleting (S340) personalized identity module profiles assigned to a specific user or activating (S372) disabled personalized identity module profiles assigned to a specific user for a user device or all user devices belonging to the specific user, depending on location information of user devices belonging to the specific user or a user message received from the specific user.
